# EUROPEAN PATENT SPECIFICATION

(11) **EP 4 011 727 B1**
(45) Date of publication and mention of the grant of the patent: **29.11.2023**
(21) Application number: 21203659.4
(22) Date of filing: 20.10.2021
(51) Int. Cl.: B60T 11/232, B60T 13/14

(54) **BRAKING DEVICE**
BREMSVORRICHTUNG
DISPOSITIF DE FREINAGE

(30) Priority: 10.12.2020 IT 202000030422
(43) Date of publication of application: 15.06.2022
(73) Proprietor: Vhit S.P.A. Societa Unipersonale, 26010 Offanengo (IT)
(72) Inventor: Martello, Fabio, 26013 Crema (IT); Cadeddu, Leonardo, 26013 Crema (IT); Calonghi, Andrea, 26022 Castelverde (Cremona), (IT)
(74) Representative: Robba, Pierpaolo

(56) References cited:
- WO-A1-2017/037666
- WO-A2-2012/035498
- US-A1- 2004 212 248

## Description

### Technical field

The present invention relates, in general, to a hydraulic braking device for a motor vehicle, and more particularly to a braking device having a servo function and a pre-filling function.

### Prior Art

In the motor vehicle industry, it is known to use hydraulic braking systems comprising one or more master cylinders acting as pumps, actuated by a pedal or corresponding pedals.

Many of these braking systems also comprise hydraulic braking assistance or servo devices, also called servo brakes (or "hydroboosters"), associated with each master cylinder.

An example of this type of braking system is described in patent application US2004212248 A1, in the name of the present applicant.

It is also known that such braking systems comprise what are known as pre-filling devices, that is to say devices for supplying pressurized fluid to take up the clearance present in the brake circuit between fixed and moving parts of the brakes (the pads and discs of a disc brake, for example), before the start of the actual braking.

An example of a braking system of this type is described in patent application WO2017037666 A1, in the name of the present applicant. In such a braking system, in particular, the pre-filling device uses pressurized fluid obtained from the servo device and, in the initial stage of actuation of the braking device, before the advance of the master cylinder piston, sends this fluid past a primary seal (that is to say, the seal between the chamber in which the master cylinder piston acts and the braking system fluid reservoir), thus adding this volume of fluid to that pumped from the master cylinder itself, with an evident increase in pedal travel and/or braking pressure.

If the brake pedal is actuated rapidly, the aforementioned braking system with the pre-filling device has the drawback of being unable to transfer the whole volume of pressurized fluid (or at least a large part of it) into the brake circuit downstream of the master cylinder. This is because, in such a situation, some of the flow of pressurized fluid from the pre-filling device is discharged to the fluid reservoir, instead of taking up the clearance in the brakes, owing to the inertia of the moving parts of the braking device itself.

The object of the present invention is to overcome the problems and limitations of the prior art by providing a hydraulic braking device in which the pre-filling function is less affected by the speed of actuation of the brake pedal, so that the clearance present in the brakes can be taken up in a better and optimized way.

This and other objects are achieved with the braking device as claimed in the attached claims.

### Description of the invention

The hydraulic braking device for a vehicle according to the invention comprises, in a housing of the braking device, a master cylinder, a servo device and a pre-filling device. In the master cylinder, a hydraulic piston defines a pressure chamber for containing a pressurized fluid, in which chamber a control pressure, transmitted to one or more brakes of the vehicle, is generated. This pressure chamber is in hydraulic communication with a discharge chamber of the braking device when the braking device is in a rest condition, in other words when the brake pedal is not actuated. In the servo device, a plunger defines a first and a second chamber of the servo device associated with communication means for establishing, in a rest condition of the braking device, hydraulic communication between the first chamber and the second chamber, and for intermittently interrupting this communication when the braking device is actuated. Additionally, a plunger piston of the servo device, fixed to the plunger, is configured to advance towards the master cylinder as a result of the actuation of the servo device.

The braking device comprises a shuttle piston connected to a push rod that can be associated with a brake pedal and configured to advance towards the master cylinder as a result of the actuation of the brake pedal.

In the pre-filling device, an inlet valve is configured to allow the entry of fluid from the second chamber of the servo device towards a pre-filling conduit of the pre-filling device, and an outlet valve is configured to remain closed in a rest condition and to be opened as a result of the advance of the shuttle piston, putting the pre-filling conduit into communication with the pressure chamber of the master cylinder.

The braking device comprises primary sealing means configured to interact with the plunger piston of the servo device as a result of the advance of said plunger piston towards the master cylinder, so as to interrupt the hydraulic communication between the pressure chamber of the master cylinder and the discharge chamber.

According to the invention, the braking device comprises a nozzle configured to put the discharge chamber into communication with a discharge compartment of the braking device. This nozzle has a small cross section, preferably between 0.2 and 7 mm². Additionally, the length of the nozzle is preferably between 0.1 and 20 mm. Because of the small dimensions of the nozzle, it is possible to retard, and thus limit, the discharge towards the discharge compartment of the pressurized fluid obtained from the pre-filling conduit and directed towards the pressure chamber, particularly as a result of a higher speed of actuation of the brake pedal (above 10 mm/s, for example), thus preventing a large flow of this fluid from being discharged through the discharge compartment and causing a pressure drop in the rest of the braking installation (the brake circuit and brakes). In particular, the dimensions of the nozzle are suitably calibrated on the basis of the type of braking installation (braking device, brake circuit and brakes) so that, even if the brake pedal is actuated rapidly, much of the pressurized fluid supplied by the pre-filling device takes up the clearance present in the brake circuit downstream of the master cylinder before the start of the advance of the hydraulic piston, that is to say before the start of braking, in other words before the hydraulic connection between the pressure chamber of the master cylinder and the discharge chamber has been interrupted. This satisfies the need for a greater approach pressure for the moving parts of the brakes, due to inertia, as a result of the increased speed of actuation of the pedal, by ensuring that the clearance between the moving and fixed parts of the brake is effectively taken up.

According to the invention, the braking device forms the first braking device of a pair of braking devices (substantially identical) of a braking system, in which a first braking device is capable of actuating a first brake associated with a right-hand rear wheel of the vehicle, and a second braking device is capable of actuating a second brake associated with a left-hand rear wheel of the vehicle.

In the aforesaid braking system, the first braking device and the second braking device preferably share the same discharge compartment, into which the nozzles of both braking devices therefore converge.

According to the invention, a method of operation of the braking device comprises the steps of:
- in a rest condition of the braking device, making fluid flow from the second chamber of the servo device into the pre-filling conduit of the pre-filling device,
- acting on the brake pedal,
- transferring the thrust exerted via the pedal to the shuttle piston of the braking device, causing the shuttle piston to advance towards the master cylinder of the braking device,
- as a result of the advance of the shuttle piston, putting the pre-filling conduit into hydraulic communication with the pressure chamber of the master cylinder, thus causing pressurized fluid to pass from the pre-filling conduit to the pressure chamber,
- by means of the nozzle, retarding the discharge towards the discharge compartment of the pressurized fluid obtained from the pre-filling conduit and directed towards the pressure chamber, so that much of said pressurized fluid takes up the clearance present downstream of the master cylinder between the fixed and moving parts of the brakes, before the advance of the hydraulic piston of the master cylinder is actuated,
- actuating the plunger piston of the servo device, by the combined action of the shuttle piston and the servo device, to engage the hydraulic piston of the master cylinder, causing it to advance,
- interrupting the hydraulic communication between the pressure chamber and the discharge chamber as a result of the advance of the plunger piston,
- generating, by means of the hydraulic piston in the master cylinder, a pressure in the pressure chamber capable of actuating one or more brakes of the vehicle connected to the braking device.

### Brief description of the figures

These and other characteristics and advantages of the present invention will be evident from the following description of preferred embodiments, provided by way of non-limiting example with the aid of the appended figures, in which elements indicated by the same or a similar reference numeral indicate elements that have the same or a similar function and construction, and in which:
Fig. 1 shows a top view of a braking device according to the present invention;
Fig. 2 shows a view in longitudinal section, taken along the plane X-X, of the braking device of Fig. 1;
Fig. 3 shows a view in cross section, taken along the plane Z-Z, of the braking device of Fig. 1;
Fig. 3b shows a view in cross section of the braking device according to a further embodiment of the present invention;
Fig. 4 shows a top view of a braking system according to the present invention;
Fig. 5 shows a view in longitudinal section, taken along the plane X-X, of the braking system of Fig. 4;
Fig. 6 shows a view in cross section, taken along the plane Z-Z, of the braking system of Fig. 4.

### Description of Preferred Embodiments

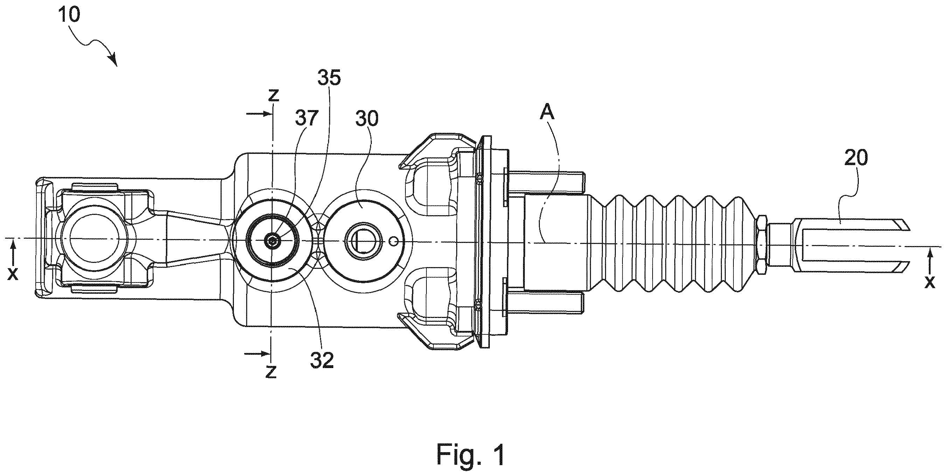

A braking device 10 according to an embodiment of the present invention, for controlling hydraulic brakes of a motor vehicle, is described below with reference to Figures 1-3.

The braking device 10 comprises a push rod 21 that can be actuated in a known way by means of a brake pedal (not shown), and a master cylinder 70, formed in a housing 12 of the braking device 10, for converting the thrust exerted by means of the brake pedal into a hydraulic pressure for actuating the vehicle brakes. The push rod 21 is connected to the brake pedal, by means of a fork 20 for example. The master cylinder 70 comprises a pressure chamber 71 in which there operate a hydraulic piston 72, for transferring the hydraulic pressure to the vehicle brakes, and a spring 73, for acting against the thrust exerted by the hydraulic piston 72. Preferably, the aforesaid elements extend longitudinally along an axis A of the braking device 10.

In the remainder of the description, for the sake of simplicity, the term "front" will be used to indicate elements nearer to or facing the master cylinder 70, and the term "rear" will be used to indicate elements nearer to or facing the brake pedal.

The braking device 10 according to the present invention has a braking servo device (also called a "hydrobooster"), of a known type, for assisting the braking of the vehicle by providing a specified servo pressure. The overall structure of the servo device included in the braking device 10 according to the present invention corresponds to that described in US2004212248 A1, which should be consulted for a detailed description of the structure itself and its operation. Only the main components of the servo device and its operation are described briefly below, focusing on the aspects necessary to an understanding of the present invention.

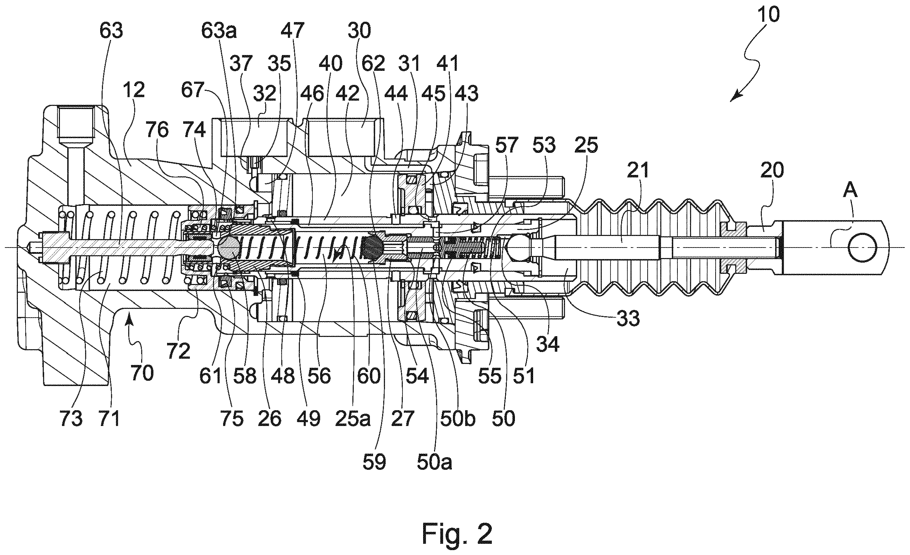

With particular reference to Figure 2, the servo device comprises, in a known way, a plunger piston 40 mounted slidingly in a longitudinal direction and connected in a fixed way to an annular plunger 41 which separates a front chamber 42 from a rear chamber 43 of the servo device. A shuttle piston 25 is also housed in the plunger piston 40 and is slidable with respect to the latter. This shuttle piston 25 is connected at its rear, in a known way, to the push rod 21, while at its front it is associated with the hydraulic piston 72 of the master cylinder and is held in position, in a known way, by means of a spring 74 positioned between the hydraulic piston 72 and the shuttle piston 25.

In a rest condition, the front chamber 42 and the rear chamber 43 are connected hydraulically, for example via first holes 44 and second holes 45 formed radially in the plunger piston 40, which put the front chamber 42 and the rear chamber 43, respectively, into communication with an annular channel 46 formed on the outer surface of the shuttle piston 25. In this rest condition, the same pressure, particularly a high pressure, is present in the front chamber 42 and in the rear chamber 43 of the servo device, because pressurized fluid from a displacement pump and/or an accumulator which are outside the braking device 10 and are connected to an inlet compartment 30 of the device 10, which in turn is connected to the rear chamber 43 via a conduit 31, flows into the rear chamber 43.

In an actuating condition of the braking device 10, the shuttle piston 25 is made to slide with respect to the plunger piston 40, advancing towards the master cylinder 70. The shuttle piston 25 is configured so that its forward movement causes, in a known way, the interruption of the hydraulic connection between the front chamber 42 and the rear chamber 43 of the servo device. The braking device 10 is also configured so that the advance of the shuttle piston 25 causes, in a known way, the opening of a hydraulic connection between the front chamber 42 of the servo device and a discharge chamber 47; this takes place, for example, because, as a result of the advance of the shuttle piston 25 with respect to the plunger piston 40, the hydraulic seal between a gasket 49, for example an O-ring gasket, mounted on the inner surface of the plunger piston 40, and said shuttle piston 25 is broken, so that the channel 46 of the shuttle piston 25 is put into hydraulic communication with a discharge hole 48 formed in the plunger piston 40 and communicating with the discharge chamber 47.

Owing to the pressure difference created between the front chamber 42 of the servo device, which is at low pressure because it is in communication with the discharge chamber 47, and the rear chamber 43 of the servo device, at high pressure, the plunger piston 40 slides towards the hydraulic piston 72 of the master cylinder 70. The plunger piston 40 is configured so that its advance causes the closure of a hydraulic connection that is present, in a rest condition, between the pressure chamber 71 and the discharge chamber 47, and pushes the hydraulic piston 72 of the master cylinder 70, which therefore exerts the required pressure to actuate the vehicle brakes. In this way, the servo device performs a braking assistance function. In particular, the aforesaid hydraulic connection between the pressure chamber 71 and the discharge chamber 47 is interrupted because of a primary gasket 75 (a double-lip gasket, for example) housed in the hydraulic piston 72 and capable of being intercepted by the plunger piston 40 when the latter advances towards the hydraulic piston 72.

According to the invention, the braking device 10 also has a pre-filling device, that is to say a device for supplying pressurized fluid to take up the clearance present in the brake circuit downstream of the master cylinder 70 before the start of the actual braking. As is known, a degree of clearance is necessary in brakes between the fixed and moving parts (the pads and discs of a disc brake, for example) to prevent contact during the movement of the vehicle, which would lead to passive power absorption, overheating and wear. To absorb such a clearance at the start of braking, a rather high volume of pressurized fluid is required. Pre-filling devices of a known type which perform this function are described, for example, in the patent document WO2017037666 A1 in the name of the present applicant. Only the main components of the pre-filling device and its operation are described briefly below, focusing on the aspects necessary to an understanding of the present invention.

The pre-filling device according to the embodiment shown in Figure 2 is housed in a longitudinal cavity 25a formed within the shuttle piston 25, and preferably within a first bush 26 coaxial with the shuttle piston 25 and connected in a fixed way, by screwing for example, to a front end of the shuttle piston 25. The pre-filling device comprises a valve piston 50, acting as a hydraulic valve, bearing on a front end of a spring 51. The spring 51 is housed in a chamber 53 located between a rear blind end of the cavity 25a and the valve piston 50, and tends to push the latter forwards to bear against a shoulder 54 present in the cavity 25a. For example, this shoulder 54 is formed by the rear end of a second bush 27 which is fixed, by screwing for example, within the cavity 25a. The valve piston 50 is configured to close at the front, in a fluid-tight manner, the chamber 53 in which the spring 51 is located, for example by means of an O-ring gasket 55 housed in a seat of the valve piston 50 and capable of interacting with the wall of the cavity 25a of the shuttle piston 25. On the other hand, the rear of the chamber 53 is in communication with a region 33 at atmospheric pressure, by means of a conduit 34 formed in the shuttle piston 25 for example, so that the chamber 53 is also at atmospheric pressure.

The valve piston 50 of the pre-filling device comprises a longitudinal conduit 50a, open at its front towards a front portion of the cavity 25a (referred to hereafter as the pre-filling conduit 56) and blind at its rear, and a radial hole (the valve piston hole) 50b communicating with said conduit 50a. Additionally, when the valve piston 50 bears against the shoulder 54, the radial hole 50b of the valve piston is in hydraulic communication with radial holes 57 formed in the shuttle piston 25 (the shuttle piston holes) and communicating, in turn, with the second holes 45 of the plunger piston 40, and therefore with the rear chamber 43 of the servo device. In a rest condition of the braking device 10, the radial holes 57 of the shuttle piston 25 are also in hydraulic communication with the channel 46 of the shuttle piston 25, and therefore with the front chamber 42 of the servo device.

According to the illustrated embodiment, the pre-filling device further comprises a valve assembly located in front of the valve piston 50 and comprising a first ball (front ball) 58 and a second ball (rear ball) 59, between which a spring 60 is interposed. The spring 60 is configured to keep the front ball 58 bearing against a first shoulder 61 formed in the first bush 26 and to keep the rear ball 59 bearing against a second shoulder 62 formed in the second bush 27, thus closing the hydraulic communication through the pre-filling conduit 56.

The pre-filling device further comprises a fixed rod 63 positioned so that its rear end 63a can interact with the front ball 58, thus moving it and opening hydraulic communication between the pre-filling conduit 56 and the pressure chamber 71 of the master cylinder 70, at the moment when the shuttle piston 25 starts to advance towards the master cylinder 70. In particular, the hydraulic communication between the pre-filling conduit 56 and the pressure chamber 71 takes place through an annular passage 76 located between the first bush 26 and the hydraulic piston 72, and a radial hole 67 formed in the first bush 26.

The pre-filling device illustrated above represents only one example of a pre-filling device that may be used in the braking device 10 according to the present invention. Other pre-filling devices, such as those illustrated in the documents cited above, may also be used without departure from the invention.

Briefly, the pre-filling device acts in the following manner. In a rest position, the servo pressure in the front chamber 42 and rear chamber 43 of the servo device, connected to each other as illustrated above, supplies the pre-filling conduit 56 through the channel 46 of the shuttle piston 25, and through the holes 57 of the shuttle piston 25 and the hole 50b and the conduit 50a of the valve piston 50.

In the rest position, the front ball 58 is closed, and the fluid from the rear chamber 43 therefore increases its pressure in the pre-filling conduit 56, exerting a hydraulic thrust on the valve piston 50 until it overcomes the load of the spring 51 positioned in the chamber 53, which, as mentioned above, is at atmospheric pressure. When what is known as the "pre-filling pressure" is reached in the pre-filling conduit, the valve piston 50 intercepts and thus closes the hole 50b of the shuttle piston.

The pre-filling device remains in this position until the pressure in the pre-filling conduit 56 is equal to or greater than the pre-filling pressure.

When the braking device is actuated, the front ball 58 is moved by the rod 63 as a result of the advance of the shuttle piston 25, causing hydraulic communication to be opened between the pre-filling conduit 56 and the pressure chamber 71 of the master cylinder 70, and consequently causing pressurized fluid to pass from the pre-filling conduit 56 to the pressure chamber 71. When this takes place, the hydraulic connection between the pressure chamber 71 of the master cylinder 70 and the discharge chamber 47 has not yet been interrupted by the advance of the plunger piston 40. The aforesaid opening of the hydraulic communication between the pre-filling conduit 56 and the pressure chamber 71 of the master cylinder 70 causes a pressure drop in the pre-filling conduit 56, so that the valve piston 50 of the pre-filling device advances once more against the shoulder 54 present in the cavity 25a of the shuttle piston 25, reconnecting the rear chamber 43 of the servo device to the pre-filling conduit 56. The pre-filling device therefore acts so as to keep the pressure in the pre-filling conduit 56 substantially constant by means of a continuous modulated movement of the valve piston 50 which causes the opening and closure of the hydraulic communication between the pre-filling conduit 56 and the rear chamber 43 of the servo device. This constant pressure level is determined by the thrust exerted by the spring 51.

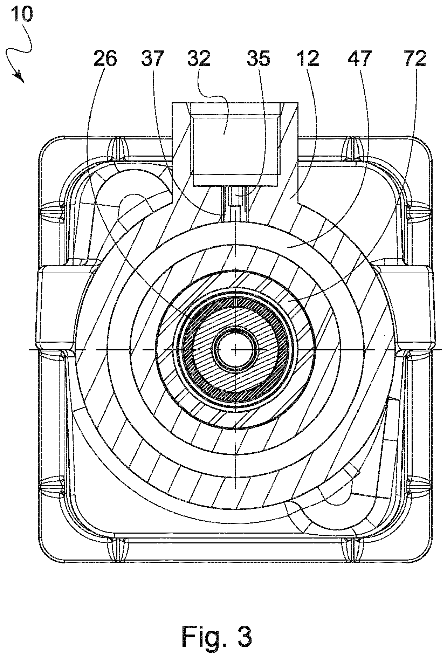

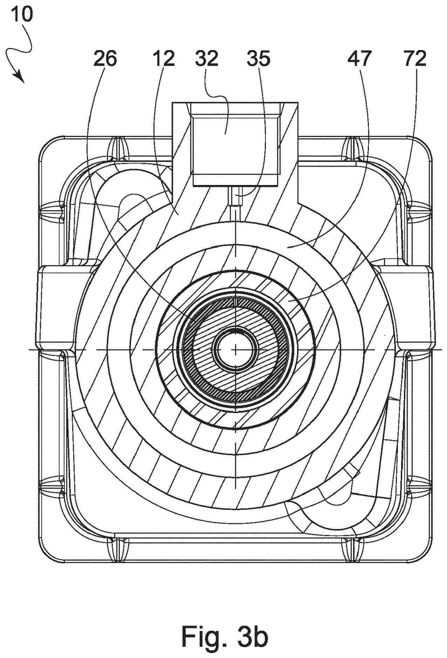

With particular reference to Figures 2 and 3, according to the present invention, the discharge chamber 47 communicates with a discharge compartment 32 of the braking device 10 via a nozzle or constriction 35, which preferably has a cross section of between 0.2 and 7 mm². Additionally, the length of the nozzle 35 is preferably between 0.1 and 20 mm. The aforesaid nozzle 35 is particular advantageous if the brake pedal of the braking device 10 is actuated rapidly. This is because the nozzle 35 has small dimensions for retarding, and thus limiting, the flow of the fluid from the pre-filling conduit 56 towards the discharge compartment 32, particularly in response to a higher speed of actuation of the brake pedal (above 10 mm/s, for example), thus preventing an excessive pressure drop in the rest of the braking installation (the brake circuit and brakes) relative to the pre-filling pressure defined above. In particular, the dimensions of the nozzle 35 are suitably calibrated so that, even if the brake pedal is actuated rapidly, much of the pressurized fluid supplied by the pre-filling device takes up the clearance present in the brake circuit downstream of the master cylinder 70 before the start of the advance of the hydraulic piston 72, that is to say before the start of braking, before the hydraulic connection between the pressure chamber 71 of the master cylinder 70 and the discharge chamber 47 has been interrupted. This satisfies the need for a greater approach pressure for the moving parts of the brakes, due to inertia, as a result of the increased speed of actuation of the pedal, by ensuring that the clearance between the moving and fixed parts of the brake is effectively taken up.

The nozzle 35 is preferably formed in an insert 37 configured to be inserted, preferably removably, into a corresponding seat formed in the housing 12 of the braking device 10. This advantageously makes it possible to vary the dimensions of the nozzle 35 simply by replacing the insert 37. Thus the dimensions of the nozzle 35 may be suitably calibrated on the basis of the characteristics of the braking installation, and may be modified as necessary in case of changes in the braking installation, so that the pre-filling function can always be executed in an optimal manner. With reference to Figures 1-3, the insert 37 is, for example, a threaded cylindrical insert that can be screwed into the corresponding seat in the housing 12.

With reference to Figure 3b, according to a further embodiment of the braking device 10, the nozzle 35 is formed directly in the housing 12 of the braking device 10.

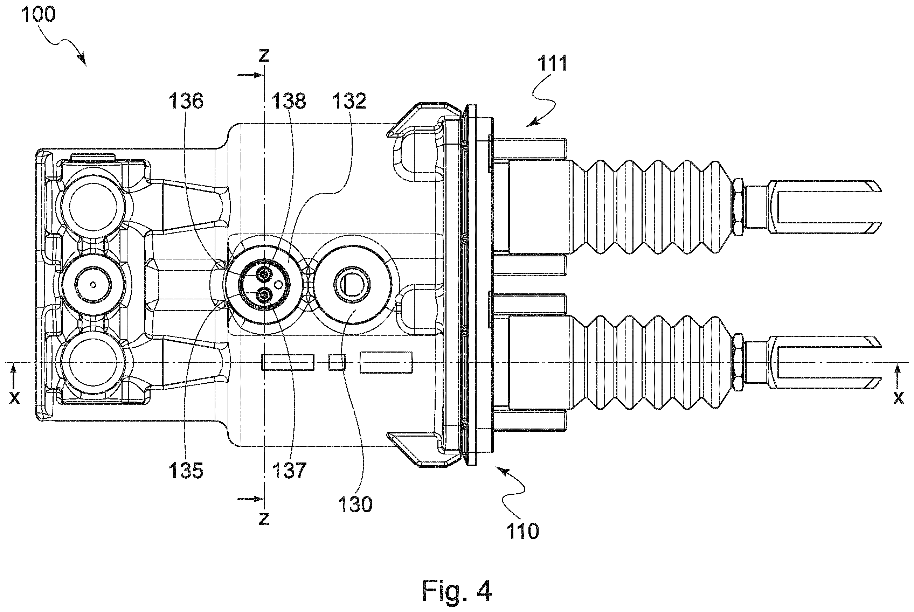

With reference to Figures 4-6, according to a further embodiment of the present invention, the braking device illustrated above represents the first braking device of a pair of braking devices 110, 111 (substantially identical) of a braking system 100, preferably for an agricultural tractor or the like. In such a braking system 100, each braking device 110, 111 is associated, in a known way, with a respective brake of a rear wheel of the agricultural tractor, so that it can act on a single rear brake and provide what is known as a "steer by braking" function.

In the braking system 100, when it is desired to carry out normal, non-steering braking by actuating the pedals of both braking devices, the control pressures supplied by the master cylinders of the pair of braking devices 110, 111 must be balanced in order to provide balanced braking, that is to say a substantially identical strength of braking on both rear wheels. For this purpose, the braking devices 110, 111 are provided with balancing devices.

The braking system 100 according to the illustrated embodiment incorporates, for each braking device 110, 111, a respective balancing device whose general structure, described only briefly below, corresponds to that described in patent application WO2017013595 A1, on behalf of the present applicant, which should be consulted for a more detailed description.

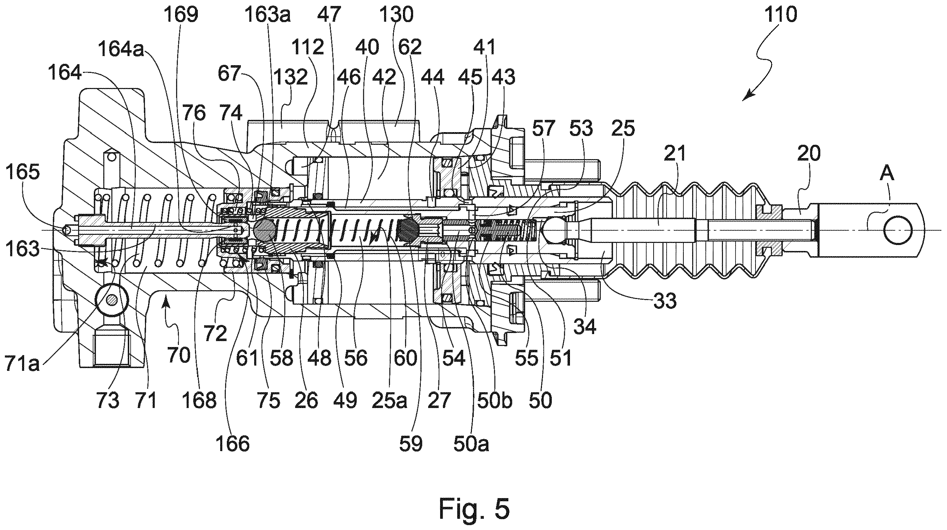

With reference to Figure 5, only the braking device 110 of the braking system 100 is shown, since the two braking devices 110, 111 are substantially identical. Additionally, the braking device 110 will be described mainly in relation to the balancing device, since this is the only part that is substantially different from the braking device 10 described above. For all the components of the braking system 110 that are unchanged from the braking device 10, the same reference numerals as those used for the braking device 10 will be retained.

The "balancing device" of the braking device 110 comprises a rod 163, coaxial with the shuttle piston 25 and fixed at a front end 71a of the pressure chamber 71 of the master cylinder 70. A balancing channel 164 is formed within the rod 163. A front end of the balancing channel 164 is connected, via a hole 165, to a balancing conduit (not shown) which in turn is in communication with a front end of the balancing channel of the other braking device 111 of the braking system 100. A rear end of the balancing channel 164 terminates in at least one radial hole 164a. This radial hole 164a is intercepted by a normally closed balancing valve 166 fixed to the first bush 26. The balancing valve 166 comprises, for example, a gasket 168 which is capable of intercepting the radial hole 164a, and which is preferably fitted on a tube 169 mounted in the first bush 26. The balancing valve 166 is configured to open when the shuttle piston 25, moves, as a result of the actuation of the braking device 110, towards the front part of the braking device 110. Because of the sliding of the gasket 168 on the rod 163, the radial hole 164a is freed, thus bringing the balancing channel 164 into hydraulic connection with the pre-filling conduit 56, and therefore with the pressure chamber 71 of the master cylinder 70, through the radial hole 67 formed in the first bush 26 and the annular passage 76.

The balancing between the control pressures present in the pressure chambers of the master cylinders of the two braking devices 110, 111 is then provided mechanically after a specified travel of the respective shuttle pistons.

As shown in Figures 4-6, the two braking devices 110, 111 of the braking system 100 preferably share a single inlet compartment 130, connected to the rear chamber 43 of each braking device 110, 111, and a single discharge compartment 132, connected to the discharge chamber 47 of each braking device 110, 111.

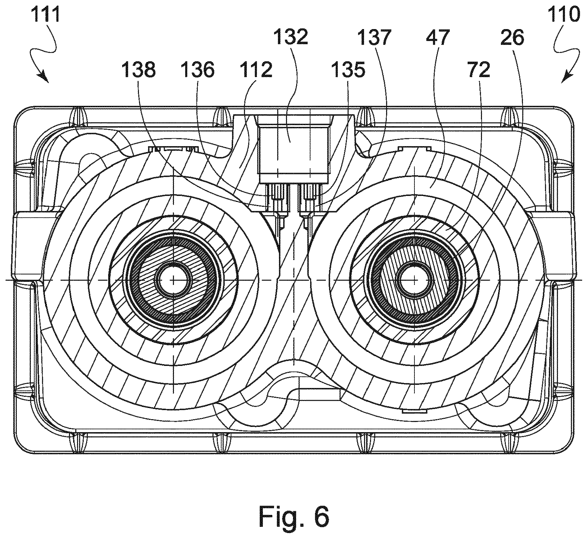

With particular reference to Figures 5 and 6, according to the present invention, the discharge chamber 47 of each braking device 110, 111 communicates with the discharge compartment 132 of the braking system 100 via a respective nozzle or constriction 135, 136. Each nozzle 135, 136 preferably has a cross section of between 0.2 and 7 mm². Additionally, the length of the nozzle 135, 136 is preferably between 0.1 and 20 mm. As illustrated above for the single braking device 10, each nozzle 135, 136 has small dimensions for retarding, and thus limiting, the flow of the fluid from the pre-filling conduit 56 towards the discharge compartment 132, particularly in response to a higher speed of actuation of the brake pedal (above 10 mm/s, for example), thus preventing an excessive pressure drop in the rest of the braking installation (the brake circuit and brakes) relative to the pre-filling pressure defined above. The dimensions of the nozzle 135, 136 are suitably calibrated so that, even if the brake pedal is actuated rapidly, much of the pressurized fluid supplied by the pre-filling device takes up the clearance present in the respective portion of the brake circuit downstream of each master cylinder 70 before the start of the advance of the hydraulic piston 72, that is to say before the start of braking. Advantageously, owing to the fact that each discharge chamber 47 communicates with the discharge compartment 132 via its own nozzle 135 or 136, the aforementioned advantages remain regardless of whether a single braking device 110, 111 or both of them are actuated.

The nozzles 135, 136 are preferably formed in respective inserts 137, 138 configured to be inserted, preferably removably, into corresponding seats formed in a housing 112 of the braking system 100. This advantageously makes it possible to vary the dimensions of the nozzle 135, 136 simply by replacing the insert 137, 138. Thus the dimensions of the nozzles 135, 136 may be suitably calibrated on the basis of the characteristics of the braking installation, and may be modified as necessary in case of changes in the braking installation, so that the pre-filling function can always be executed in an optimal manner. With reference to Figures 4 and 6, the inserts 137, 138 are, for example, threaded cylindrical inserts that can be screwed into the corresponding seats in the housing 112.

According to a further embodiment of the braking system, which is not shown, the nozzles are formed directly in the housing 112 of the braking device.

The operation of the braking device 10 or 110, 111 proposed by the present invention is described below.

In the rest condition, the front chamber 42 and rear chamber 43 of the servo device are connected to each other as described above, and the servo pressure present in these chambers supplies the pre-filling conduit 56. In said rest condition, the front ball 58 of the pre-filling device is closed, and the fluid from the rear chamber 43 therefore increases its pressure in the pre-filling conduit 56, exerting a hydraulic thrust on the valve piston 50 until it overcomes the load of the spring 51 positioned in the chamber 53, which, as mentioned above, is at atmospheric pressure. When what is known as the "pre-filling pressure" is reached, the valve piston 50 intercepts the radial hole 57 of the shuttle piston 25, thus interrupting the communication between this radial hole 57 and the hole 50b in the valve piston, and therefore between the rear chamber 43 and the pre-filling channel 56.

The pre-filling device remains in this position until the pressure in the pre-filling conduit 56 is equal to or greater than the pre-filling pressure.

When the brake pedal of the braking device 10 or 110, 111 is actuated, the thrust exerted via the brake pedal is transferred to the push rod 21 and therefore to the shuttle piston 25, causing the latter to advance towards the front part of the braking device 10 or 110, 111.

The advance of the shuttle piston 25 causes, in a known way, the actuation of the servo device, by means of the intermittent interruption of the hydraulic connection between its front chamber 42 and its rear chamber 43, and between its front chamber 42 and the discharge chamber 47.

Additionally, as a result of the advance of the shuttle piston 25, the front ball 58 is moved by the rod 63 or 163, causing hydraulic communication to be opened between the pre-filling conduit 56 and the pressure chamber 71 of the master cylinder 70. This causes pressurized fluid to pass from the pre-filling conduit 56 to the pressure chamber 71, as a result of which the clearance present in the brake circuit downstream of the master cylinder 70 before the start of the actual braking is taken up.

The opening of the communication between the pre-filling conduit 56 and the pressure chamber 71 also causes a pressure drop in the pre-filling conduit 56, so that the valve piston 50 of the pre-filling device advances once more against the shoulder 54 present in the cavity 25a of the shuttle piston 25, reconnecting the rear chamber 43 of the servo device to the pre-filling conduit 56. The pre-filling device therefore acts so as to keep the pressure in the pre-filling conduit 56 substantially constant by means of a continuous modulated movement of the valve piston 50 which causes the opening and closure of the hydraulic communication between the pre-filling conduit 56 and the rear chamber 43 of the servo device. This constant pressure level is determined by the thrust exerted by the spring 51.

In this step, which precedes the advance of the hydraulic piston 72, the pressure chamber 71 and the discharge chamber 47 are in hydraulic connection, and the nozzle 35 or 135, 136, by retarding the discharge towards the discharge compartment 32 or 132 of the pressurized fluid obtained from the pre-filling conduit and directed towards the pressure chamber, acts in such a way that much of said pressurized fluid takes up the clearance present in the respective portion of the brake circuit downstream of each master cylinder 70, instead of being discharged into the discharge compartment 32 or 132.

The actuation of the servo device, in combination with the shuttle piston 25, causes the actuation of the plunger piston 40, which, as it advances, interrupts the hydraulic connection between the pressure chamber 71 and the discharge chamber 47, and engages the hydraulic piston 72 of the master cylinder 70, causing the latter to advance. This advance, in turn, generates a pressure in the pressure chamber 71 of the master cylinder 70 capable of actuating one or more brakes of the vehicle connected to the braking device 10.

In the case of a braking system 100 comprising a pair of braking devices 110, 111, the two braking devices may be actuated simultaneously, causing the simultaneous braking of at least both rear wheels of the vehicle, or only one of the two braking devices may be actuated, providing "steer by braking".

If the braking devices 110, 111 of the braking system 100 are actuated simultaneously, then, owing to the balancing devices described above, the control pressures at the outlets of the pressure chambers of the two master cylinders are to be balanced, thus providing the same braking action on at least both of the rear wheels of the vehicle.

## Claims

1. Hydraulic braking device (10; 110, 111) of a vehicle, comprising, in a housing (12; 112), a master cylinder (70), a servo device and a pre-filling device, wherein:
a hydraulic piston (72) of the master cylinder (70) defines a pressure chamber (71) for containing a pressurized fluid, in which chamber a control pressure, transmitted to one or more brakes of the vehicle, is generated, said pressure chamber (71) being in hydraulic communication with a discharge chamber (47) of the braking device (10) in a rest condition of the braking device (10),
- a plunger (41) of the servo device defines a first chamber (42) and a second chamber (43) of the servo device associated with communication means (44, 45, 46) for establishing, in a rest condition of the braking device (10), hydraulic communication between the first chamber (42) and the second chamber (43), and for intermittently interrupting said communication when the braking device (10) is actuated;
- a plunger piston (40) of the servo device, fixed to the plunger (41) of the servo device, is configured to advance towards the master cylinder (70) as a result of the actuation of the servo device;
- a shuttle piston (25) is connected to a push rod (21) that can be associated with a brake pedal and is configured to advance towards the master cylinder (70) as a result of the actuation of the brake pedal;
- an inlet valve (50, 57, 59, 60, 27) of the pre-filling device is configured to allow the entry of fluid from the second chamber (43) of the servo device towards a pre-filling conduit (56) of the pre-filling device;
- an outlet valve (26, 58, 60, 63, 67) of the pre-filling device is configured to remain closed in a rest condition and to be opened as a result of the advance of the shuttle piston (25), putting the pre-filling conduit (56) into communication with the pressure chamber (71) of the master cylinder (70);
- primary sealing means (75) are configured to interact with said plunger piston (40) of the servo device as a result of the advance of said plunger piston towards the master cylinder (70), so as to interrupt said hydraulic communication between the pressure chamber (71) and the discharge chamber (47),
**characterized in that** it comprises a nozzle (35; 135, 136) configured to put the discharge chamber (47) into communication with a discharge compartment (32; 132) of the braking device (10; 110, 111).

2. Device according to Claim 1, wherein the nozzle (35; 135, 136) has dimensions such that, even if the brake pedal is actuated rapidly, much of the pressurized fluid supplied by the pre-filling device takes up the clearance present in the respective portion of the brake circuit downstream of the master cylinder (70) before the start of the advance of the hydraulic piston (72).

3. Device according to Claim 1 or 2, wherein the nozzle (35; 135, 136) has a cross section of between 0.2 and 7 mm².

4. Device according to any of the preceding claims, wherein the nozzle (35; 135, 136) has a length of between 0.1 and 20 mm.

5. Device according to any of the preceding claims, wherein the nozzle (35; 135, 136) is formed in an insert (37; 137, 138) configured to be inserted into a corresponding seat formed in the housing (12; 112) of the braking device (10; 110, 111).

6. Device according to Claim 5, wherein the insert (37; 137, 138) is a threaded cylindrical insert that can be screwed into the corresponding seat in the housing (12; 112).

7. Device according to any of the preceding claims, wherein the inlet valve (50, 57, 59, 60, 27) of the pre-filling device is configured to close, preventing the entry of fluid from the second chamber (43) into the pre-filling conduit (56), when a predetermined pre-filling pressure is reached in the pre-filling conduit (56).

8. Braking system (100) comprising a first and a second braking device (110, 111) according to any of Claims 1 to 7, wherein the first braking device (110) is capable of actuating a first brake associated with a right-hand rear wheel of the vehicle, and the second braking device (111) is capable of actuating a second brake associated with a left-hand rear wheel of the vehicle.

9. System according to Claim 8, wherein said first braking device (110) and said second braking device (111) share the same discharge compartment (132), into which the nozzles (135, 136) of both braking devices (110, 111) converge.

10. Method of operation of a braking device (10; 110, 111) according to any of Claims 1 to 7, comprising the steps of:
- in a rest condition, making fluid flow from the second chamber (43) of the servo device into the pre-filling conduit (56) of the pre-filling device,
- acting on the brake pedal,
- transferring the thrust exerted via the pedal to the shuttle piston (25) of the braking device (10; 110, 111), causing the shuttle piston (25) to advance towards the master cylinder (70) of the braking device (10; 110, 111),
- as a result of the advance of the shuttle piston (25), putting the pre-filling conduit (56) into hydraulic communication with the pressure chamber (71) of the master cylinder (70), thus causing pressurized fluid to pass from the pre-filling conduit (56) to the pressure chamber (71),
- by means of the nozzle (35; 135, 136), limiting the discharge towards the discharge compartment (32; 132) of the pressurized fluid obtained from the pre-filling conduit (56) and directed towards the pressure chamber (71), so that, even in the case of rapid actuation of the brake pedal, much of said pressurized fluid takes up the clearance present downstream of the master cylinder (70) between the fixed and moving parts of the brakes, before the advance of the hydraulic piston (72) of the master cylinder (70) is actuated,
- actuating the plunger piston (40), by the combined action of the shuttle piston (25) and the servo device, to engage the hydraulic piston (72) of the master cylinder (70), causing the advance of the hydraulic piston (72),
- interrupting the hydraulic communication between the pressure chamber (71) and the discharge chamber (47) as a result of the advance of the plunger piston (40),
- generating, by means of the hydraulic piston (72) in the master cylinder (70), a pressure in the pressure chamber (71) capable of actuating one or more brakes of the vehicle connected to the braking device (10; 110, 111).

## Patentansprüche

1. Hydraulische Bremsvorrichtung (10; 110, 111) eines Fahrzeugs, die in einem Gehäuse (12; 112) einen Hauptzylinder (70), eine Servoeinrichtung und eine Vorfüllvorrichtung aufweist, wobei:
ein Hydraulikkolben (72) des Hauptzylinders (70) eine Druckkammer (71) zur Beinhaltung eines mit Druck beaufschlagten Fluids definiert, wobei in dieser Kammer ein Steuerdruck erzeugt wird, der auf eine oder mehrere Bremsen des Fahrzeugs übertragen wird, wobei die Druckkammer (71) in einem Ruhezustand der Bremsvorrichtung (10) in hydraulischer Verbindung mit einer Auslasskammer (47) der Bremsvorrichtung (10) steht,
- ein Plunger (41) der Servoeinrichtung eine erste Kammer (42) und eine zweite Kammer (43) der Servoeinrichtung definiert, die mit Kommunikationsmittel (44, 45, 46) verbunden sind, um in einem Ruhezustand der Bremsvorrichtung (10) eine hydraulische Verbindung zwischen der ersten Kammer (42) und der zweiten Kammer (43) herzustellen und um diese Verbindung zeitweise zu unterbrechen, wenn die Bremsvorrichtung (10) betätigt wird;
- ein Plungerkolben (40) der Servoeinrichtung, der an dem Plunger (41) der Servoeinrichtung befestigt ist, so ausgebildet ist, dass er sich infolge der Betätigung der Servoeinrichtung zu dem Hauptzylinder (70) hin vorwärts bewegt;
- ein Pendelkolben (25) mit einer Schubstange (21) verbunden ist, die mit einem Bremspedal verbunden werden kann und so ausgebildet ist, dass er sich infolge der Betätigung des Bremspedals zu dem Hauptzylinder (70) hin vorwärts bewegt;
- ein Einlassventil (50, 57, 59, 60, 27) der Vorfüllvorrichtung, das so ausgebildet ist, dass es den Eintritt von Fluid aus der zweiten Kammer (43) der Servoeinrichtung in eine Vorfüllleitung (56) der Vorfüllvorrichtung ermöglicht;
- ein Auslassventil (26, 58, 60, 63, 67) der Vorfüllvorrichtung, das so ausgebildet ist, dass es in einem Ruhezustand geschlossen bleibt und infolge des Vorschubs des Pendelkolbens (25) geöffnet wird, wodurch die Vorfüllleitung (56) mit der Druckkammer (71) des Hauptzylinders (70) in Verbindung gebracht wird;
- primäre Dichtungsmittel (75) so ausgebildet sind, um mit dem Plungerkolben (40) der Servoeinrichtung infolge der Vorwärtsbewegung des Plungerkolbens hin zum Hauptzylinder (70) zusammenzuwirken, um die hydraulische Kommunikation zwischen der Druckkammer (71) und der Auslasskammer (47) zu unterbrechen,
**dadurch gekennzeichnet, dass** sie eine Düse (35; 135, 136) aufweist, die so ausgebildet ist, dass sie die Auslasskammer (47) mit einem Auslassfach (32; 132) der Bremsvorrichtung (10; 110, 111) in Verbindung bringt.

2. Vorrichtung nach Anspruch 1, **dadurch gekennzeichnet, dass** die Düse (35; 135, 136) solche Abmessungen hat, dass sogar bei schneller Betätigung des Bremspedals ein Großteil des von der Vorfüllvorrichtung gelieferten, mit Druck beaufschlagten Fluids den im jeweiligen Abschnitt des Bremskreises stromabwärts des Hauptzylinders (70) vorhandenen Freiraum vor Beginn der Vorwärtsbewegung des Hydraulikkolbens (72) aufnimmt.

3. Vorrichtung nach Anspruch 1 oder 2, wobei die Düse (35; 135, 136) einen Querschnitt zwischen 0,2 und 7 mm² aufweist.

4. Vorrichtung nach einem der vorhergehenden Ansprüche, wobei die Düse (35; 135, 136) eine Länge zwischen 0,1 und 20 mm hat.

5. Vorrichtung nach einem der vorhergehenden Ansprüche, wobei die Düse (35; 135, 136) in einem Einsatz (37; 137, 138) ausgestaltet ist, der so ausgebildet ist, dass er in einen entsprechenden Sitz eingesetzt werden kann, der in dem Gehäuse (12; 112) der Bremsvorrichtung (10; 110, 111) ausgestaltet ist.

6. Vorrichtung nach Anspruch 5, wobei der Einsatz (37; 137, 138) ein zylindrischer Einsatz mit Gewinde ist, der in den entsprechenden Sitz im Gehäuse (12; 112) eingeschraubt werden kann.

7. Vorrichtung nach einem der vorhergehenden Ansprüche, wobei das Einlassventil (50, 57, 59, 60, 27) der Vorfüllvorrichtung so ausgebildet ist, dass es sich schließt und den Eintritt von Fluid aus der zweiten Kammer (43) in die Vorfüllleitung (56) verhindert, wenn ein vorbestimmter Vorfülldruck in der Vorfüllleitung (56) erreicht ist.

8. Bremssystem (100), aufweisend eine erste und eine zweite Bremsvorrichtung (110, 111) nach einem der Ansprüche 1 bis 7, wobei die erste Bremsvorrichtung (110) in der Lage ist, eine erste Bremse zu betätigen, die einem rechten Hinterrad des Fahrzeugs zugeordnet ist, und die zweite Bremsvorrichtung (111) in der Lage ist, eine zweite Bremse zu betätigen, die einem linken Hinterrad des Fahrzeugs zugeordnet ist.

9. System nach Anspruch 8, wobei sich die erste Bremsvorrichtung (110) und die zweite Bremsvorrichtung (111) dieselbe Auslasskammer (132) teilen, in die die Düsen (135, 136) beider Bremsvorrichtungen (110, 111) zusammenlaufen.

10. Verfahren zum Betreiben einer Bremsvorrichtung (10; 110, 111) nach einem der Ansprüche 1 bis 7, die Schritte aufweisend:
- Zulassen einer Fluidströmung in einem Ruhezustand aus der zweiten Kammer (43) der Servoeinrichtung in die Vorfüllleitung (56) der Servoeinrichtung,
- Betätigen des Bremspedals,
- Übertragen des über das Pedal ausgeübten Drucks auf den Pendelkolben (25) der Bremsvorrichtung (10; 110, 111), wodurch sich der Pendelkolben (25) zum Hauptzylinder (70) der Bremsvorrichtung (10; 110, 111) hin vorwärts bewegt,
- infolge des Vorwärtsbewegens des Pendelkolbens (25) die Vorfüllleitung (56) in hydraulische Verbindung mit der Druckkammer (71) des Hauptzylinders (70) bringen, wodurch mit Druck beaufschlagtes Fluid von der Vorfüllleitung (56) in die Druckkammer (71) gelangt,
- Begrenzung des Austritts des aus der Vorfüllleitung (56) gewonnenen und zur Druckkammer (71) gerichteten Fluids zur Auslasskammer (32; 132) mittels der Düse (35; 135, 136), so dass selbst im Falle einer schnellen Betätigung des Bremspedals ein Großteil des mit Druck beaufschlagten Fluids den stromabwärts des Hauptzylinders (70) zwischen den festen und den beweglichen Teilen der Bremsen vorhandenen Zwischenraum ausfüllt, bevor die Vorwärtsbewegung des Hydraulikkolbens (72) des Hauptzylinders (70) betätigt wird,
- Betätigen des Plungerkolbens (40) durch die kombinierte Wirkung des Pendelkolbens (25) und des Geräts, um mit dem Hydraulikkolben (72) des Hauptzylinders (70) in Eingriff zu kommen, wodurch der Vorschub des Hydraulikkolbens (72) betätigt wird,
- Unterbrechen der hydraulischen Verbindung zwischen der Druckkammer (71) und der Auslasskammer (47) infolge der Vorwärtsbewegung des Plungerkolbens (40),
- Erzeugen eines Drucks in der Druckkammer (71) mittels des Hydraulikkolbens (72) im Hauptzylinder (70), der in der Lage ist, eine oder mehrere Bremsen des mit dem Bremsgerät (10; 110, 111) verbundenen Fahrzeugs zu betätigen.

## Revendications

1. Dispositif de freinage hydraulique (10 ; 110, 111) d'un véhicule, comprenant, dans un carter (12 ; 112), un maître-cylindre (70), un dispositif d'asservissement et un dispositif de préremplissage, dans lequel :
un piston hydraulique (72) du maître-cylindre (70) définit une chambre de pression (71) destinée à contenir un fluide sous pression, chambre dans laquelle une pression de commande, transmise à un ou plusieurs freins du véhicule, est générée, ladite chambre de pression (71) étant en communication hydraulique avec une chambre d'évacuation (47) du dispositif de freinage (10) dans un état de repos du dispositif de freinage (10),
- un plongeur (41) du dispositif d'asservissement définit une première chambre (42) et une seconde chambre (43) du dispositif d'asservissement associées à des moyens de communication (44, 45, 46) destinés à établir, dans un état de repos du dispositif de freinage (10), une communication hydraulique entre la première chambre (42) et la seconde chambre (43), et à interrompre par intermittence ladite communication lorsque le dispositif de freinage (10) est actionné ;
- un piston plongeur (40) du dispositif d'asservissement, fixé au plongeur (41) du dispositif d'asservissement, est configuré pour avancer vers le maître-cylindre (70) suite à l'actionnement du dispositif d'asservissement ;
- un piston navette (25) est relié à une tige de poussée (21) qui peut être associée à une pédale de frein et est configuré pour avancer vers le maître-cylindre (70) à la suite de l'actionnement de la pédale de frein ;
- une soupape d'admission (50, 57, 59, 60, 27) du dispositif de préremplissage est configurée pour permettre l'entrée de fluide depuis la seconde chambre (43) du dispositif d'asservissement vers un conduit de préremplissage (56) du dispositif de préremplissage ;
- une soupape de refoulement (26, 58, 60, 63, 67) du dispositif de préremplissage est configurée pour rester fermée dans un état de repos et pour être ouverte à la suite de l'avancée du piston navette (25), mettant le conduit de préremplissage (56) en communication avec la chambre de pression (71) du maître-cylindre (70) ;
- des moyens d'étanchéité primaires (75) sont configurés pour interagir avec ledit piston plongeur (40) du dispositif d'asservissement suite à l'avancée dudit piston plongeur vers le maître-cylindre (70), de façon à interrompre ladite communication hydraulique entre la chambre de pression (71) et la chambre d'évacuation (47),
**caractérisé en ce qu'**il comprend une buse (35 ; 135, 136) configurée pour mettre la chambre d'évacuation (47) en communication avec un compartiment d'évacuation (32 ; 132) du dispositif de freinage (10 ; 110, 111).

2. Dispositif selon la revendication 1, dans lequel la buse (35 ; 135, 136) a des dimensions telles que, même si la pédale de frein est actionnée rapidement, une grande partie du fluide sous pression fourni par le dispositif de préremplissage occupe le débattement présent dans la portion respective du circuit de freinage en aval du maître-cylindre (70) avant le début de l'avancée du piston hydraulique (72).

3. Dispositif selon la revendication 1 ou 2, dans lequel la buse (35 ; 135, 136) a une section entre 0,2 et 7 mm².

4. Dispositif selon l'une quelconque des revendications précédentes, dans lequel la buse (35 ; 135, 136) a une longueur entre 0,1 et 20 mm.

5. Dispositif selon l'une quelconque des revendications précédentes, dans lequel la buse (35 ; 135, 136) est formée dans un insert (37 ; 137, 138) configuré pour être inséré dans un siège correspondant formé dans le carter (12 ; 112) du dispositif de freinage (10 ; 110, 111) .

6. Dispositif selon la revendication 5, dans lequel l'insert (37 ; 137, 138) est un insert cylindrique fileté qui peut être vissé dans le siège correspondant du carter (12 ; 112).

7. Dispositif selon l'une quelconque des revendications précédentes, dans lequel la soupape d'admission (50, 57, 59, 60, 27) du dispositif de préremplissage est configurée pour se fermer, empêchant l'entrée de fluide depuis la seconde chambre (43) jusque dans le conduit de préremplissage (56), lorsqu'une pression de préremplissage prédéterminée est atteinte dans le conduit de préremplissage (56).

8. Système de freinage (100) comprenant un premier et un second dispositif de freinage (110, 111) selon l'une quelconque des revendications 1 à 7, dans lequel le premier dispositif de freinage (110) est capable d'actionner un premier frein associé à une roue arrière droite du véhicule, et le second dispositif de freinage (111) est capable d'actionner un second frein associé à une roue arrière gauche du véhicule.

9. Système selon la revendication 8, dans lequel ledit premier dispositif de freinage (110) et ledit second dispositif de freinage (111) partagent le même compartiment d'évacuation (132), dans lequel convergent les buses (135, 136) des deux dispositifs de freinage (110, 111).

10. Procédé de fonctionnement d'un dispositif de freinage (10 ; 110, 111) selon l'une quelconque des revendications 1 à 7, comprenant les étapes consistant à :
- dans un état de repos, faire circuler du fluide depuis la seconde chambre (43) du dispositif d'asservissement jusque dans le conduit de préremplissage (56) du dispositif de préremplissage,
- agir sur la pédale de frein,
- transférer la poussée exercée par l'intermédiaire de la pédale au piston navette (25) du dispositif de freinage (10 ; 110, 111), amenant le piston navette (25) à avancer vers le maître-cylindre (70) du dispositif de freinage (10 ; 110, 111),
- suite à l'avancée du piston navette (25), mettre le conduit de préremplissage (56) en communication hydraulique avec la chambre de pression (71) du maître-cylindre (70), amenant ainsi un fluide sous pression à passer du conduit de préremplissage (56) à la chambre de pression (71),
- au moyen de la buse (35 ; 135, 136), limiter l'évacuation vers le compartiment d'évacuation (32 ; 132) du fluide sous pression obtenu du conduit de préremplissage (56) et dirigé vers la chambre de pression (71), de sorte que, même en cas d'actionnement rapide de la pédale de frein, une grande partie dudit fluide sous pression occupe le débattement présent en aval du maître-cylindre (70) entre les parties fixe et mobile des freins, avant que l'avancée du piston hydraulique (72) du maître-cylindre (70) ne soit actionnée,
- actionner le piston plongeur (40), par l'action combinée du piston navette (25) et du dispositif d'asservissement, pour engager le piston hydraulique (72) du maître-cylindre (70), amenant l'avancée du piston hydraulique (72),
- interrompre la communication hydraulique entre la chambre de pression (71) et la chambre d'évacuation (47) suite à l'avancée du piston plongeur (40),
- générer, au moyen du piston hydraulique (72) dans le maître-cylindre (70), une pression dans la chambre de pression (71) capable d'actionner un ou plusieurs freins du véhicule reliés au dispositif de freinage (10 ; 110, 111).
